# EUROPEAN PATENT APPLICATION

(11) **EP 2 065 434 A2**
(43) Date of publication of application: **03.06.2009**
(21) Application number: 08253816.6
(22) Date of filing: 26.11.2008
(51) Int. Cl.: C08K 5/098, C08K 5/13, C08L 59/04

(54) **Polyacetal resin molded article having excellent acid resistance**

(30) Priority: 29.11.2007 JP 2007308537
(71) Applicant: Polyplastics Co., Ltd., Tokyo 108-8280 (JP)
(72) Inventor: Bessho, Minoru, Fuji-shi, Shizuoka (JP); Shimoda, Akihide, Fuji-shi, Shizuoka (JP)
(74) Representative: Peel, James Peter

(57) **Abstract**

Provided is a polyacetal resin molded article having an excellent acid resistance, used for parts contacting with a liquid containing an acidic substance. Specifically, a molded article having excellent durability under direct contact with a liquid containing an acidic component is obtained by molding the composition of (A) 100 parts by weight of a polyacetal resin, (B) 0.01 to 5 parts by weight of an antioxidant, and (C) 0.01 to 10 parts by weight of a metal salt of fatty acid.

## Description

### Technical Field

The present invention relates to a molded article composed of a specific polyacetal resin composition, showing excellent acid resistance under direct contact with a liquid containing an acidic substance.

### Background Art

Polyacetal resins are materials used in wide fields such as automobile parts, electrical machinery parts, electronic parts, varieties of machines, construction materials, and functional household goods as the engineering plastics owing to their excellent mechanical properties, heat resistance, chemical resistance, and electrical properties, and also to their easiness in molding and working.

The polyacetal resins, however, have significant limitation in their uses in an acidic atmosphere because of their weakness to acids. Accordingly, their practical uses are limited only in an atmosphere with small concentration of acid.

Regarding the use fields of the polyacetal resins, for example as the automobile parts, they are applied to large size parts such as fuel transfer unit represented by fuel pump module which directly contacts with fuel oil owing to their excellent chemical resistance, specifically fuel resistance. As the household goods, they are used as the wet area parts which are exposed to tap water containing small concentration of chlorine or to wastewater containing small concentration of acidic detergent.

As for the automobile fuel, there is a tendency in recent years to actively promote the adoption of diesel fuel friendly to environment instead of gasoline fuel as a preventive measure to the global warming caused by the emissions of carbon dioxide and as a countermeasure to price hike of oil. The light oil used as the diesel fuel, however, contains larger amount of sulfur which causes acidic characteristic than that in gasoline, and which also contains organic acids.

The bio-diesel fuel which draws attention in recent years from the point of environmental issues contains free fatty acids as impurities, and has the maximum operating temperature of about 100°C compared with about 60°C for gasoline, thus the bio-diesel fuel is expected to contain large amounts of acidic substances generated by high temperature deterioration of the bio-diesel fuel. Consequently, the parts which directly contact with that kind of fuel are requested to be the materials having both fuel resistance and excellent acid resistance.

Also for the household wet area parts, large amounts of hot water and tap water containing chlorine water under high temperature and high humidity, or of cleaning water containing acidic detergent, are used in kitchen and bath room, thereby the parts are requested to have high grade durability (acid resistance) to water containing acidic substances in wide range of concentrations. No molded article that satisfies these requested performances is, however, available at present.

### Disclosure of the Invention

The present invention provides a molded article composed of a polyacetal resin, and having high durability to direct contact with a liquid containing acidic substance such as organic acid and inorganic acid, and specifically to provide a molded article for automobile parts having excellent durability to direct contact with automobile fuel containing acidic component, and for wet area parts having excellent durability to direct contact with acidic detergent.

The inventors of the present invention conducted detail study to solve the above issues, and found that the purpose of the invention is achieved by a molded article composed of a specific polyacetal resin composition, thus perfected the present invention.

That is, the present invention provides a molded article being composed of a composition containing (A) 100 parts by weight of a polyacetal resin, (B) 0.01 to 5 parts by weight of an antioxidant, and (C) 0.01 to 10 parts by weight of a metal salt of fatty acid, being used in direct contact with a liquid containing an acidic component.

The present invention also relates to a use of a molded article being composed of a composition containing (A) 100 parts by weight of a polyacetal resin, (B) 0.01 to 5 parts by weight of an antioxidant, and (C) 0.01 to 10 parts by weight of a metal salt of fatty acid, in direct contact with a liquid containing an acidic component.

The molded article parts composed of the polyacetal resin composition according to the present invention have very high acid resistance, and have sufficient mechanical strength and heat resistance. Owing to these advantageous characteristics, the molded article parts are suitable for wide varieties of parts including the molded article which directly contacts with a liquid containing an acidic component, such as the parts which directly contact with automobile fuel containing sulfur and acidic substance, and such as wet area parts which directly contact with an acidic detergent.

### Detailed Description of the Invention

The present invention is described in detail in the following. The (A) polyacetal resin used in the present invention is a polymer having oxymethylene group (-CH₂O-) as the main structural unit, practically including a polyacetal copolymer made only of repeated unit of oxymethylene group and a polyacetal copolymer containing small quantity of structural unit other than oxymethylene group. Although any of them can be used, it is preferable to use the one containing polyacetal copolymer as the substrate resin in view of acid resistance which is an object of the present invention. A preferable polyacetal copolymer is the one prepared by copolymerizing a comonomer component by an amount of 0.5 to 30% by weight, and more preferably the one prepared by copolymerizing a comonomer component by an amount of 0.5 to 10% by weight. The polyacetal copolymer prepared by copolymerizing a comonomer component has excellent acid resistance and can keep excellent heat stability, mechanical strength, and the like. The polyacetal copolymer may be the one having not only linear molecular structure but also branched molecular structure or crosslinked molecular structure.

On manufacturing that type of polyacetal copolymer, the main monomer adopts a cyclic oligomer of formaldehyde, represented by trioxane. As the comonomer component, there is adopted a compound selected from cyclic ether and cyclic formal, having at least one C-C bond. That type of comonomer includes ethylene oxide, 1,3-dioxolane, diethyleneglycol formal, 1,4-butanediol formal, 1,3-dioxane, and propylene oxide.

For the above (A) polyacetal resin, specifically polyacetal copolymer, the degree of polymerization and the like are not specifically limited, and the degree of polymerization and the like can be adjusted depending on the use object and the molding means. From the point of achieving both the acid resistance and the moldability, however, the (A) polyacetal resin preferably has the Melt Index (MI), determined at 190°C and 2.16 kg of load, of 1 to 100 g/10 min, and more preferably from 2 to 90 g/10 min.

Applicable (B) antioxidant in the present invention includes hindered phenols and hindered amines. Examples of the hindered phenols are
2,2'-methylenebis(4-methyl-6-t-butylphenol), hexamethyleneglycol-bis(3,5-di-t-butyl-4-hydroxyhydrocinnamate), tetrakis[methylene(3,5-di-t-butyl-4-hydroxyhydrocinnamate)]methane, triethyleneglycol-bis-3-(3-t-butyl-4-hydroxy-5-methylphenly)propionate, 1,3,5-trimethyl-2,4,6-tris(3,5-di-t-butyl-4-hydroxy-benzyl)-benzene, n-octadecyl-3-(4'-hydroxy-3',5'-di-t-butylphenol)-propionate, 4,4'-methylenebis(2,6-di-t-butylphenol), 4,4'-butylidene-bis-(6-t-butyl-3-methyl-phenol), di-stearyl-3,5-di-t-butyl-4-hydroxybenzylphosphonate, 2-t-butyl-6-(3-t-butyl-5-methyl-2-hydroxybenzyl)-4-methylphenylacrylate, and 3,9-bis{2-[3-(3-t-butyl-4-hydroxy-5-methylphenyl)-propionyloxy]-1,1-dimethylethyl}-2,4,8,10-tetraoxaspiro-[5,5]undecane.

Examples of hindered amines are
4-acetoxy-2,2,6,6-tetramethylpiperidine,
4-stearoyloxy-2,2,6,6-tetramethylpiperidine,
4-acryloyloxy-2,2,6,6-tetramethylpiperidine,
4-methoxy-2,2,6,6-tetramethylpiperidine,
4-benzoyloxy-2,2,6,6-tetramethylpiperidine,
4-cyclohexyloxy-2,2,6,6-tetramethylpiperidine,
4-phenoxy-2,2,6,6-tetramethylpiperidine,
4-benzyloxy-2,2,6,6-tetramethyopiperidine,
4-(phenylcarbamoyloxy)-2,2,6,6-tetramethylpiperidine,
bis(2,2,6,6-tetramethyl-4-piperidyl)oxalate,
bis(2,2,6,6-tetramethyl-4-piperidyl)malonate,
bis(2,2,6,6-tetramethyl-4-piperidyl)adipate,
bis(2,2,6,6-tetramethyl-4-piperidyl)sebacate,
bis(1,2,2,6,6-pentamethyl-piperidyl)sebacate,
bis(2,2,6,6-tetramethyl-4-piperidyl)terephthalate,
1,2-bis(2,2,6,6-tetramethyl-4-piperidyloxy)ethane,
bis(2,2,6,6-tetramethyl-4-piperidyl)hexamethylene-1,6-dicarbamate, bis(1-methyl-2,2,6,6-tetramethyl-4-piperidyl)-adipate, and tris(2,2,6,6-tetramethyl-4-piperidyl)benzene-1,3,5-tricarboxylate.

Furthermore, there can be used high molecular weight piperidine derivative polycondensate such as succinic dimethyl-1-(2-hydroxyethyl)-4-hydroxy-2,2,6,6-tetramethylpi peridine polycondensate, and poly[(6-morpholino-S-triazine-2,4-diyl)[2,2,6,6-tetramethyl-4-piperidyl]imino]-hexamethylene[(2,2,6,6-tetramethyl-4-piperidyl)imino].

In the present invention, at least one, tow or more of above antioxidant can be used. As of these, specifically preferred ones are tetrakis[methylene(3,5-di-t-butyl-4-hydroxyhydrocinnamate)]methane, triethyleneglycol-bis-3-(3-t-butyl-4-hydroxy-5-methylphenyl)propionate, 3,9-bis{2-[3-(3-t-butyl-4-hydroxy-5-methylphenyl)-propionyloxy]-1,1-dimethylethyl}-2,4,8,10-tetraoxaspiro[5,5]undecane, and poly[(6-morpholino-S-triazine-2,4-diyl)[2,2,6,6-tetramethyl-4-piperidyl]imino]-hexamethylene[(2,2,6,6-tetramethyl-4-piperidyl)imino].

The added amount of the (B) antioxidant in the present invention is in a range from 0.01 to 5 parts by weight to 100 parts by weight of the (A) polyacetal resin. If the added amount of the (B) antioxidant is small, the characteristic of acid prevention, which is an object of the present invention, becomes insufficient, and further the acid resistance, which is an object of the present invention, deteriorates. If the added amount of the (B) antioxidant is excess, unfavorable effect appears in the mechanical characteristics, moldability, and the like for the resin composition.

According to the present invention, (C) metal salt of fatty acid is added to drastically improve the acid resistance. The fatty acid structuring the (C) metal salt of fatty acid may be a saturated fatty acid or an unsaturated fatty acid. Alternatively, there can be used the one in which a part of the hydrogen atoms is substituted by a substituent such as hydroxyl group. Examples of that type of fatty acid are C10 or higher monovalent or divalent fatty acid, for example: C10 or higher monovalent saturated fatty acid, (C10-C34 saturated fatty acid, (preferably C10-C30 saturated fatty acid), such as capric acid, lauric acid, myristic acid, pentadecylic acid, palmitic acid, stearic acid, arachic acid, behenic acid or montanic acid) ; C10 or higher monovalent unsaturated fatty acid, (C10-C34 unsaturated fatty acid, (preferably C10-C30 unsaturated fatty acid), such as oleic acid, linolic acid, linoleic acid, arachidonic acid or erucic acid) ; C10 or higher divalent fatty acid, (dibasic fatty acid), (divalent C10-C30 saturated fatty acid, (preferably divalent C10-C20 saturated fatty acid), such as sebacic acid, dodecanic acid, tetradecanic acid or thapsic acid) ; and divalent C10-C30 unsaturated fatty acid, (preferably divalent C10-C20 unsaturated fatty acid), such as decenodioic acid or dodecenodioic acid.

The above fatty acids include fatty acid having one or plural hydroxyl groups in the molecule, (such as hydroxyl-saturated C10-C26 fatty acid such as 12-hdroxystearate).

A preferable metal structuring the (C) metal salt of fatty acid is an alkali earth metal. Examples of the alkali earth metal are calcium, magnesium, barium, and strontium. Also zinc is preferable as the metal structuring the metal salt.

Specifically preferred (C) component is a meal salt of C10-C34 long chain fatty acid with calcium or zinc.

The added amount of the (C) metal salt of fatty acid in the present invention is in a range from 0.01 to 10 parts by weight to 100 parts by weight of the (A) polyacetal resin, and preferably from 0.01 to 3 parts by weight. Addition of the (C) metal salt of fatty acid significantly contributes to the improvement of acid resistance. If the added amount of the (C) metal salt of fatty acid is small, the target acid resistance cannot be attained. If the added amount thereof is excess, the mechanical characteristics and the like are deteriorated.

According to the present invention, further addition of (D) nitrogen-containing compound is preferred for the resin composition to form a molded article having an excellent acid resistance. The added amount of the (D) nitrogen-containing compound, if applied, is preferably in a range from 0.001 to 5 parts by weight to 100 parts by weight of the (A) polyacetal resin, and more preferably from 0.01 to 2 parts by weight.

Examples of the nitrogen-containing compound are melamine and its derivative (including guanamine and its derivative), melamine formaldehyde resin, hydrazide compound, polyamide, and polyacrylamide.

As for the melamine and its derivative, there are applied melamine(2,4,6-triamino-sym-triazine), melem, melam, mellon, N-butylmelamine, N-phenylmelamine, N,N-diphenylmelamine, N,N-diallylmelamine, N,N",N"-trimethylolmelamine,
benzoguanamine(2,4-diamino-6-phenyl-sym-triazine),
2,4-diamino-6-methyl-sym-triazine,
2,4-diamino-6-butyl-sym-triazine,
2,4-diamino-6-benzyloxy-sym-triazine,
2,4-diamino-6-butoxy-sym-triazine,
2,4-diamino-6-cyclohexyl-sym-triazine,
2,4-diamino-6-chloro-sym-triazine,
2,4-diamino-6-mercapto-sym-triazine,
2,4-dioxy-6-mercapto-sym-triazine,
2,4-dioxy-6-amino-sym-triazine (Amelide),
2-oxy-4,6-diamino-sym-triazine (Amelin), and
N,N,N',N'-tetracyanoethylbenzoguanamine.

Applicable melamine formaldehyde resin is a water-insoluble melamine-formaldehyde polycondensate prepared from melamine and formaldehyde at a molar ratio range from 1:0.8 to 1:10.0.

Applicable hydrazide compound includes hydrazide adipate and hydrazide sebacate.

Applicable polyamide includes: sole or copolymerized polyamide such as nylon 12, nylon 6·10, and nylon 6·66·610; substituted polyamide having methylol group and the like; nylon salt; and polyester amide synthesized from caprolactam, or from a combination of caprolacton and caprolactam.

Applicable polyacrylamide includes one, two or more of sole polymer of acrylamide, a copolymer thereof, and a crosslinked polymer thereof. As of these, preferred ones are one, two or more of melamine, melamine derivative, and melamine formaldehyde resin, and more preferable one is melamine formaldehyde resin which is a water-insoluble melamine-formaldehyde polycondensate prepared from melamine and formaldehyde at a molar ratio of from 1:0.8 to 1:10.0.

According to the present invention, it is preferable to further add (E) nuclei forming agent to the resin composition for forming molded article having excellent acid resistance. The (E) nuclei forming agent is expected to increase the degree of crystallization of the resin material, forms a fine crystal structure, improves the mechanical strength, and further to contribute to improvement of acid resistance. The added amount of the (E) nuclei forming agent is preferably in a range from 0.01 to 3 parts by weight to 100 parts by weight of the (A) polyacetal resin, and more preferably from 0.02 to 2 parts by weight.

Applicable (E) nuclei forming agent includes a polyacetal copolymer having branched or crosslinked structure, and boron nitride.

According to the present invention, it is preferable to further add (F) polyalkylene glycol to the resin composition for forming molded article having excellent acid resistance. The added amount of the (F) polyalkylene glycol, if applied, is preferably in a range from 0.05 to 3 parts by weight to 100 parts by weight of the (A) polyacetal resin, and more preferably from 0.10 to 2 parts by weight.

Applicable (F) polyalkylene glycol includes polyethylene glycol and polypropylene glycol.

The molded article according to the present invention is obtained from the polyacetal resin composition having above structure, using commonly applied molding method such as injection molding, extrusion molding, compression molding, blow molding, vacuum molding, foam molding, and rotary molding.

The uses of the molded article are not specifically limited if only the molded article is a molded part which directly contacts with a liquid containing an acidic component (liquid containing an organic acid or an inorganic acid by an amount of 0.1 to 100% by weight), and examples of the uses are wide varieties of parts such as parts which directly contact with automobile fuel containing sulfur and acidic substance, and wet area parts which directly contact with acidic detergent.

### Examples

The present invention is described below in more detail. However, the present invention is not limited to the examples. Examples 1 to 11, and Comparative Examples 1 to 7

To the (A) polyacetal resin, there were added and mixed the (B) antioxidant, the (C) metal salt of fatty acid, and at need, the (D) nitrogen-containing compound, the (E) nuclei forming agent, and the (F) polyalkylene glycol at the respective mixing ratios given in Table 1. The mixture was melt-kneaded in a twin-screw extruder to prepare the respective pellet-shape compositions. The detail of the mixed components is described later.

Then, the pellets were injection-molded to prepare ISO tensile test pieces. The acid resistance of the respective test pieces was evaluated by the following procedure. The result is given in Table 1.

For comparison, there were prepared the respective compositions, given in Table 2, namely a composition containing no (C) metal salt of fatty acid, and a composition containing other metal compound instead of the (C) metal salt of fatty acid. Similar evaluation was given to these comparative compositions. The result is given in Table 2.

### Evaluation method for acid resistance

As the acid resistance, the evaluation was given on the durability to a 5% hydrochloric acid aqueous solution and to a 40% acetic acid aqueous solution. The evaluation was given in terms of weight keeping rate, tensile strength keeping rate, and elongation keeping rate at break point.

### a. Weight keeping rate

The injection-molded ISO tensile test piece was allowed to air-conditioning at 23°C and 50% RH for 24 hours, then the weight of the molded article was determined. After that, the molded article was dipped in an acid solution adjusted to the above concentration at 60°C to treat for a specified period (7 days for the hydrochloric acid aqueous solution, and 14 days for the acetic acid aqueous solution). The taken out molded article was washed with water, followed by drying at 23°C for 24 hours, then the weight was determined.

The weight keeping rate (%) was calculated by [(Weight after the acid treatment) / (Weight before the acid treatment) x 100.

### b. Tensile strength keeping rate and c. Elongation keeping rate at break point

The injection-molded ISO tensile test piece was allowed to air-conditioning at 23°C and 50% RH for 24 hours, then the tensile strength and the elongation at break point (the tensile strength and the elongation at the break point, before the acid treatment) were determined in accordance with ISO 527.
Separate test piece which was treated by air-conditioning under the same condition to above was treated in an acid solution, washing with water, and drying, similar to above, then the tensile strength and the elongation at break point (the tensile strength and the elongation at the break point, after the acid treatment) were determined in accordance with ISO 527.

The tensile strength keeping rate (%) was calculated by [(Tensile strength after the acid treatment) / (Tensile strength before the acid treatment)] x 100.

The elongation keeping rate at break point (%) was calculated by [(Elongation at break point after the acid treatment)/(Elongation at break point before the acid treatment)] x 100.

Higher tensile strength keeping rate (%) and higher elongation keeping rate at break point (%) show superior acid resistance.

### (Mixed components)

### (A) Polyacetal resin

A polyacetal copolymer, prepared by copolymerizing trioxane 96.7% by weight with 1,3-dioxolan 3.3% by weight, having Melt Index (determined at 190°C and 2160 g of load) of 8.9 g/10min.

### (B) Antioxidant

Tetrakis[methylene-(3,5-di-t-butyl-4-hydroxyhydrocinnamate)]methane

### (C) Metal salt of fatty acid, and metal compound as the comparative compound

C-1: Calcium stearate
C-2: calcium 12-hydroxystearate
C-3: Calcium montanate
C-4: Magnesium stearate
C-5: Zinc stearate
C-6: Calcium carbonate (Comparative compound)
C-7: Magnesium carbonate (Comparative compound)
C-8: Zinc oxide (Comparative compound)

### (D) Nitrogen-containing compound Melamine

### (E) Nuclei forming agent

A polyacetal copolymer having crosslinked structure, prepared by copolymerizing trioxane 96.7% by weight, 1, 3-dioxolan 3% by weight, and butanediol diglycidyl ether 0.3% by weight.

### (F) Polyalkylene glycol

Polyethylene glycol (MW=6000)

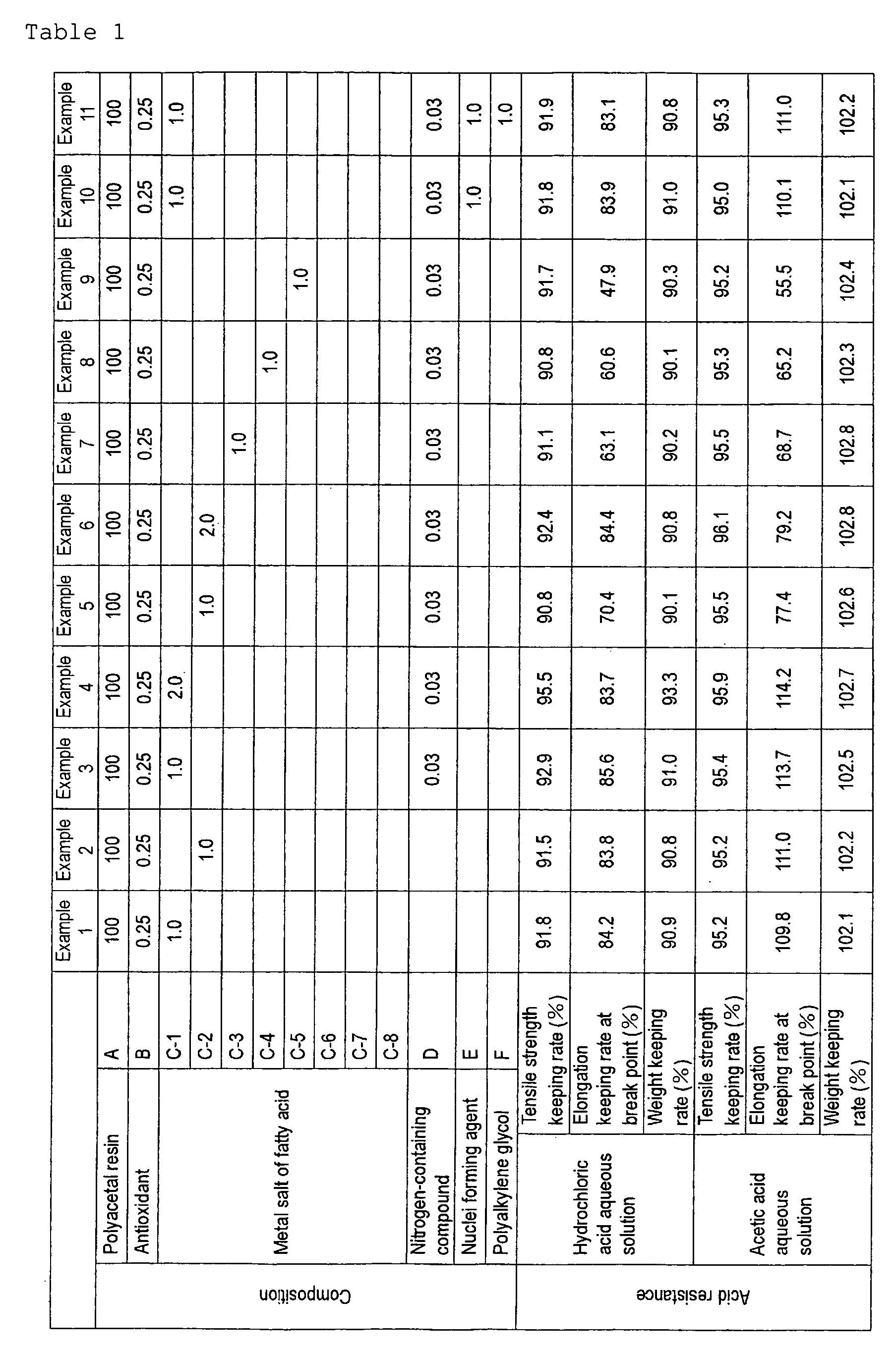

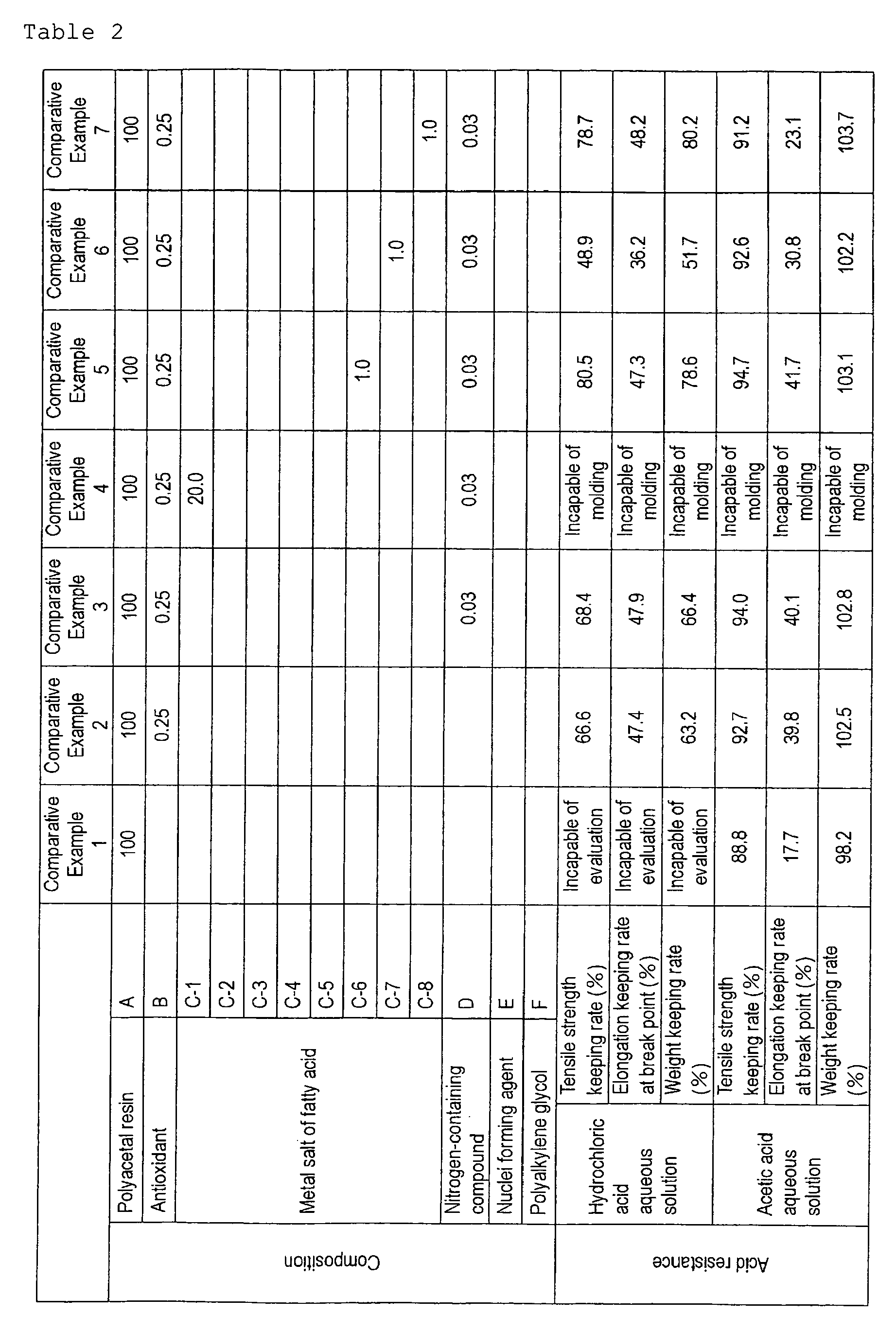

## Claims

1. A molded article being composed of a composition comprising (A) 100 parts by weight of a polyacetal resin, (B) 0.01 to 5 parts by weight of an antioxidant, and (C) 0.01 to 10 parts by weight of a metal salt of fatty acid; being used in direct contact with a liquid containing an acidic component.

2. The molded article according to claim 1, wherein the (C) metal salt of fatty acid is a metal salt of C10 to C34 long chain fatty acid and calcium or zinc.

3. The molded article according to claim 1, wherein the composition further comprises (D) 0.001 to 5 parts by weight of a nitrogen-containing compound to 100 parts by weight of the (A) polyacetal resin.

4. The molded article according to claim 3, wherein the (D) nitrogen-containing compound is selected from the group consisting of melamine or its derivative, guanamine or its derivative, melamine formaldehyde resin, hydrazide compound, polyamide, and polyacrylamide.

5. The molded article according to any one of claims 1 to 4, wherein the composition further comprises (E) 0.01 to 3 parts by weight of a nuclei forming agent to 100 parts by weight of the (A) polyacetal resin.

6. The molded article according to any one of claims 1 to 4, wherein the composition further comprises (F) 0.05 to 3 parts by weight of a polyalkylene glycol to 100 parts by weight of the (A) polyacetal resin.

7. The molded article according to any one of claims 1 to 4, wherein the liquid containing an acidic component is a liquid which contains 0.1 to 100% by weight of an organic acid or an inorganic acid.

8. The molded article according to any one of claims 1 to 4, wherein the liquid containing an acidic compound is a fuel for automobile.

9. The molded article according to any one of claims 1 to 4, wherein the liquid containing an acidic component is an acidic detergent.

10. Use of a molded article being composed of a composition comprising (A) 100 parts by weight of a polyacetal resin, (B) 0.01 to 5 parts by weight of an antioxidant, and (C) 0. 01 to 10 parts by weight of a metal salt of fatty acid in direct contact with a liquid containing an acidic component.
